# EUROPEAN PATENT SPECIFICATION

(11) **EP 4 175 350 B1**
(45) Date of publication and mention of the grant of the patent: **03.09.2025**
(21) Application number: 21832251.9
(22) Date of filing: 28.06.2021
(51) Int. Cl.: H04W 24/08, H04B 17/318

(54) **SIGNAL STRENGTH MEASUREMENT METHOD, WIRELESS GATEWAY DEVICE AND READABLE STORAGE MEDIUM**
SIGNALSTÄRKENMESSVERFAHREN, DRAHTLOSE GATEWAY-VORRICHTUNG UND LESBARES SPEICHERMEDIUM
PROCÉDÉ DE MESURE D'INTENSITÉ DE SIGNAL, DISPOSITIF PASSERELLE SANS FIL ET SUPPORT DE STOCKAGE LISIBLE

(30) Priority: 30.06.2020 CN 202010618084
(43) Date of publication of application: 03.05.2023
(73) Proprietor: ZTE Corporation, Shenzhen, Guangdong 518057 (CN)
(72) Inventor: QIU, Yanbin, Shenzhen, Guangdong 518057 (CN); CAO, Mingming, Shenzhen, Guangdong 518057 (CN)
(74) Representative: Zoli, Filippo
(86) International application number: PCT/CN2021/102692
(87) International publication number: WO 2022/001936

(56) References cited:
- WO-A1-01/37447
- WO-A1-2019/043677
- CN-A- 103 945 434
- CN-A- 105 409 286
- CN-A- 107 682 890
- CN-A- 111 278 073
- CN-A- 112 566 173
- US-A1- 2019 335 317
- QUALCOMM INCORPORATED: "RCPI and RSNI measurements", vol. RAN WG2, no. Dresden, Germany; 20140818 - 20140822, 17 August 2014 (2014-08-17), XP050788449, Retrieved from the Internet <URL:http://www.3gpp.org/ftp/Meetings_3GPP_SYNC/RAN1/Docs/> [retrieved on 20140817]

## Description

### TECHNICAL FIELD

The present disclosure relates to the technical field of wireless local area networks, and in particular to a signal strength measurement method, a wireless gateway device and a readable storage medium.

### BACKGROUND

Wi-Fi (wireless fidelity, a wireless local area network based on the IEEE 802.11b standard) is a very flexible wireless data communication system, which can be used as an effective extension of the conventional wired local area network or as a stand-alone network, so that the flexibility of the wireless access network is greatly expanded.

In the Wi-Fi technology, one station (STA) usually obtains network services by connecting to an Access Point (AP). However, since the coverage of a single AP is not large, and the signal is greatly attenuated after passing through a wall, when APs are used for large area coverage, a plurality of APs with the same Service Set Identifier (SSID) and authenticated encryption mode are often deployed to construct a rooming network. In order to realize the roaming of the STA among a plurality of APs, the STA preferentially selects an AP with the maximum Received Signal Strength Indication (RSSI) at the current position for access during the movement process. However, since the RSSI algorithms applicable to STAs from different manufacturers are different, in the roaming process, it is easy for the gateway device to make a wrong judgment on the RSSI of the STA, thereby affecting the use of the network and resulting in poor user experience.

WO01/37447A1 discusses errors in an RSSI measured by a mobile station in a wireless network that uses TSPC are compensated by identifying the mobile station using one or more characteristics such as a manufacturer of the mobile station, and then using correction factors that correspond to the identification. Thus, where the errors are introduced by specific measurement techniques common to mobile stations made by that manufacturer, corresponding correction factors can be retrieved and used to correct or compensate the RSSI.

CN105409286A discloses an apparatus, system, and method for performing handover of a mobile station (MS) between a base station (BS) and an access point (AP) are described. In one embodiment, the MS may receive one or more threshold values for reporting measurements to the BS. The MS may convert the threshold values to device-specific threshold values. The MS may determine one or more network quality values associated with the AP. The MS may compare the network quality values to the device-specific threshold values.

### SUMMARY

The summary of the subject matter described herein will be given below. The summary is not intended to limit the protection scope of the claims.

The embodiments of the present disclosure provide a signal strength measurement method, a wireless gateway device and a readable storage medium.

In accordance with an aspect of the present disclosure, provided is a signal strength measurement method. The method includes: acquiring a station (STA) identification field of an STA that accesses an Access Point (AP); searching for a signal strength algorithm associated with the STA identification field; in response to finding the associated signal strength algorithm, obtaining a Received Signal Strength Indication (RSSI) of the STA according to the found signal strength algorithm; and, in response to not finding the associated signal strength algorithm, acquiring a first RSSI and a Received Channel Power Indication (RCPI) of the STA, matching a first signal strength algorithm from preset signal strength algorithms according to the first RSSI and the RCPI, and associating the first signal strength algorithm with the STA identification field.

In accordance with another aspect of the embodiments of the present disclosure, provided is a wireless gateway device. The device includes at least one processor and a memory communicatively connected to the at least one processor, where the memory stores an instruction executable by the at least one processor which, when executed by the at least one processor, causes the at least one processor to implement the signal strength measurement method described above.

In accordance with another aspect of the embodiments of the present disclosure, provided is a computer-readable storage medium, storing a computer-executable instruction which, when executed by a computer, causes the computer to implement the signal strength measurement method described above.

Other features and advantages of the present disclosure will be illustrated in the following description, and will partially become apparent from the description or be appreciated by practicing the present disclosure. The objectives and other advantages of the present disclosure can be achieved and obtained by the structures specified in the description, the claims, and the accompanying drawings.

### BRIEF DESCRIPTION OF DRAWINGS

The accompanying drawings are provided for a further understanding of the technical schemes of the present disclosure and constitute a part of the description. The accompanying drawings are used in conjunction with the embodiments of the present disclosure to illustrate the technical schemes of the present disclosure, and are not intended to limit the technical schemes of the present disclosure.
FIG. 1 is a flowchart of a signal strength measurement method according to an embodiment of the present disclosure;
FIG. 2 is a flowchart of a signal strength measurement method according to another embodiment of the present disclosure;
FIG. 3 is a flowchart of a signal strength measurement method according to yet another embodiment of the present disclosure;
FIG. 4 is a flowchart of a signal strength measurement method according to yet another embodiment of the present disclosure;
FIG. 5 is a flowchart of a signal strength measurement method according to yet another embodiment of the present disclosure;
FIG. 6 is a flowchart of a signal strength measurement method according to yet another embodiment of the present disclosure;
FIG. 7 is a flowchart of a signal strength measurement method according to yet another embodiment of the present disclosure; and
FIG. 8 is a structural diagram of a wireless gateway device according to an embodiment of the present disclosure.

### DETAILED DESCRIPTION

To make the objectives, technical schemes and advantages of the present disclosure clear, the present disclosure will be further illustrated below in detail by embodiments in conjunction with the accompanying drawings. It should be understood that the specific embodiments described herein are merely for illustrating the present disclosure, and are not intended to limit the present disclosure.

It is to be noted that, although modules have been divided in the circuit structure diagrams, in some cases, the modules may be divided in a different manner from that in the circuit structure diagrams. The terms such as "first", "second" and the like in the description, the claims, and the accompanying drawings are used to distinguish similar objects, and are not necessarily used to describe a specific sequence or a precedence order.

The stations (STAs) from different manufacturers have different regulations on signal strength algorithms. By taking a mobile phone as an example, some manufacturers adopt the signal strength algorithm specified in the 802.11 standard, while some manufacturers adopt self-defined signal strength algorithms based on the device ecology. In this case, the received signal strength indication calculated for different manufacturers' STAs through an underlying driver by the gateway device in the same way may be wrong. This is because the underlying driver of a single gateway device has poor compatibility with the STAs from different manufacturers and can only calculate a value approximate to the actual RSSI, so that the calculated deviation may be large. Consequently, in the process of frequent association of the STA with the AP, it is inappropriate to use the underlying driver to calculate the RSSI, which easily lead to wrong Access Point (AP) switching during the roaming process of the STA in the current wireless local area network, so that the user cannot receive good signals and have poor experience. In view of this, the present disclosure provides a signal strength measurement method, a wireless gateway device and a readable storage medium. By traversing and calculating a plurality of preset signal strength algorithms to match a signal strength algorithm applicable to the STA that accesses an AP for the first time and associating the matched first signal strength algorithm with the STA, the first signal strength algorithm can be directly called to calculate a Received Signal Strength Indication (RSSI) of the STA during the roaming process of the STA in the current wireless local area network. Thus, the most appropriate signal strength algorithm can be called for an STA from a different manufacturer to obtain an accurate RSSI, avoiding the problem of RSSI calculation errors caused by poor compatibility during the roaming process.

The embodiments of the present disclosure will be further described below in conjunction with the accompanying drawings.

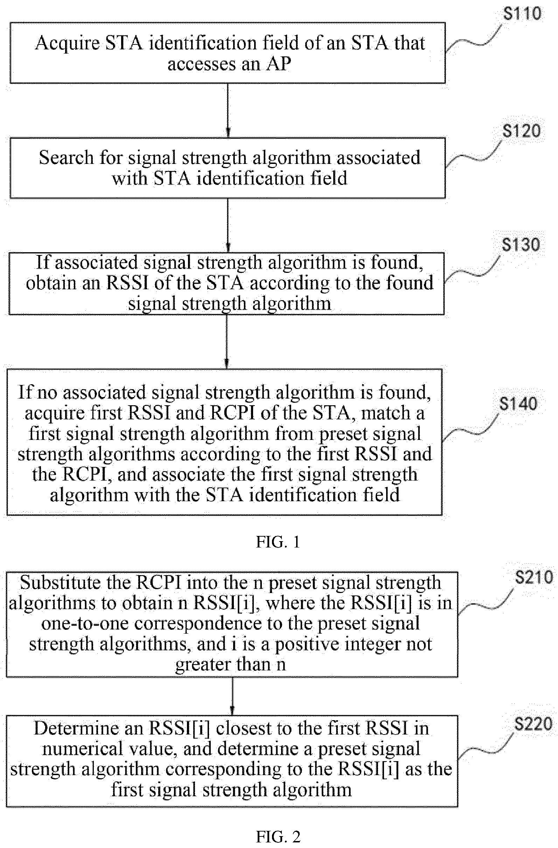

As shown in FIG. 1, in accordance with an aspect of the embodiments of the present disclosure, a signal strength measurement method is provided. The method includes the following steps S110 to S140.

At S110, a station (STA) identification field of an STA that accesses an Access Point (AP) is acquired.

The STA needs to access an AP during roaming in a current wireless local area network to realize stable network connection. Obviously, a plurality of APs are often set in the wireless local area network to expand the signal coverage. The STA selects an AP for access according to a measured strength of a Received Signal Strength Indication (RSSI) during the roaming process, and uploads information related to the STA when accessing to the AP. For example, the STA uploads an STA identification field (including a Media Access Control (MAC) address and an Internet Protocol (IP) address of the STA) to the AP, and the AP learns the information about the currently accessing STA by parsing a data packet, so as to facilitate subsequent search of the signal strength algorithm.

At S 120, a signal strength algorithm associated with the STA identification field is searched for.

The reason for searching according to the STA identification field uploaded by the STA lies in the uniqueness of the STA identification field (the MAC address, or a combination of the MAC address and the IP address). On this basis, the gateway device can correspond the STA to the signal strength algorithm one by one.

At S130, when an associated signal strength algorithm is found, an RSSI of the STA is obtained according to the found signal strength algorithm.

The S130 corresponds to non-first access of the STA. Since the gateway device has stored the signal strength algorithm corresponding to the STA, the signal strength algorithm corresponding to the STA can be directly called according to the STA identification field uploaded by the STA, to obtain the RSSI of the STA.

At S140, when no associated signal strength algorithm is found, a first RSSI and a Received Channel Power Indication (RCPI) of the STA are acquired, a first signal strength algorithm is matched from preset signal strength algorithms according to the first RSSI and the RCPI, and the first signal strength algorithm is associated with the STA identification field.

The S140 corresponds to first access of STA. Since the information about the STA that accesses an AP for the first time is not stored in the gateway device, the gateway device cannot find a corresponding signal strength algorithm, and a signal strength algorithm needs to be matched for the STA that accesses an AP for the first time. The gateway device obtains the first RSSI in a conventional way, and also obtains the RCPI through self-measurement. The first signal strength algorithm is matched from the preset signal strength algorithms according to the first RSSI and the RCPI, and is used as the signal strength algorithm suitable for the current STA for association. In an embodiment, with reference to FIG. 2, the first signal strength algorithm is selected in the following way, which includes operations S210 to S220.

At S210, the RCPI is substituted into n preset signal strength algorithms to obtain n RSSI[i], respectively, where the n RSSI[i] is in one-to-one correspondence to the preset signal strength algorithms, and i is a positive integer not greater than n.

The n signal strength algorithms are pre-stored in a memory. In order to improve the accuracy, the n preset signal strength algorithms include, but not limited to, current mainstream signal strength algorithms. The calculated RCPI is substituted into the n signal strength algorithms to obtain n signal strength values, which is denoted by RSSI[i], where the value of i is a positive integer ranging from 1 to n. That is, the result obtained from an i-th signal strength algorithm is RSSI[i].

At S220, an RSSI[i] closest to the first RSSI in numerical value is determined, and a preset signal strength algorithm corresponding to the RSSI[i] is determined as the first signal strength algorithm.

Through the above calculation, each of the n obtained RSSI[i] is compared with the first RSSI[i], the RSSI[i] closest to the first RSSI[i] in numerical value is selected, and the signal strength algorithm corresponding to the closest RSSI[i] is selected as the first signal strength algorithm. The first signal strength algorithm selected in this way is considered to be consistent or matched with the signal strength algorithm actually used by the STA, so the first signal strength algorithm is associated with the STA identification field and stored locally. Thus, the first signal strength algorithm can be directly called to calculate the RSSI when the STA accesses the AP again, so that the resource consumption is reduced and the accuracy of roaming access of the STA is improved.

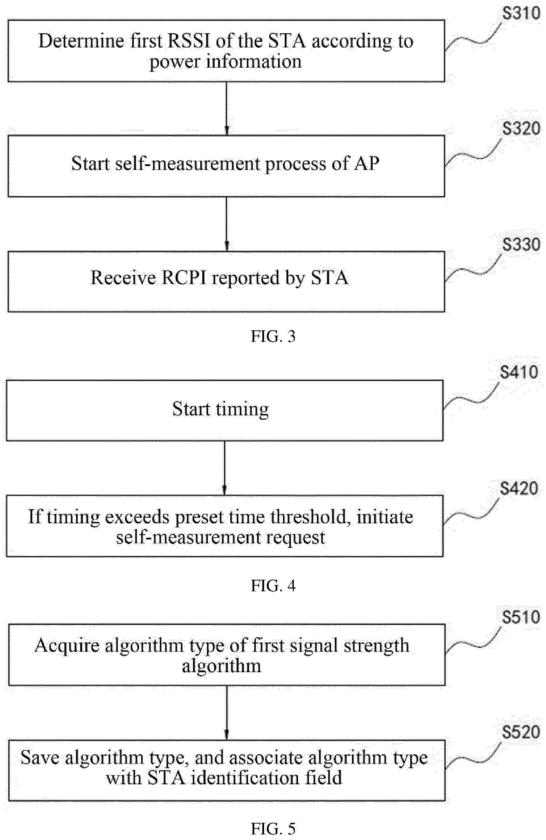

In an embodiment, with reference to FIG. 3, during the acquisition of the STA identification field of the STA that accesses the AP, the power information of the STA is also acquired. In S140, acquiring the first RSSI and the RCPI of the STA includes the following steps S310 to S330.

At S310, the first RSSI of the STA is determined according to the power information.

The RSSI may be calculated according to the power information by utilizing the underlying driver of the gateway device, that is, the RSSI is calculated in a conventional way. Although a calculation error may occur, for a STA that accesses an AP for the first time, it is appropriate to calculate the first RSSI by utilizing the underlying driver and then use the first RSSI as a reference value for signal strength algorithm matching.

At S320, a self-measurement process of the AP is started.

At S330, the RCPI reported by the STA is received.

In this embodiment, the gateway device obtains the RCPI by starting the self-measurement process. For example, the gateway device performs self-measurement based on the 802.11k protocol, so as to receive the RCPI reported by the STA. With reference to FIG. 4, starting the self-measurement process of the AP includes the following steps S410 to S420.

At S410, timing is started.

At S420, when the timing exceeds a preset time threshold, a self-measurement request is initiated.

The purpose of initiating the self-measurement request after timing is that some STAs refuse the self-measurement request initiated by the AP at an initial stage of accessing the AP. This period of time is usually 20 seconds to 30 seconds. Therefore, in order to be compatible with various STAs to realize RSSI measurement, the gateway device performs timing internally, and the self-measurement request can be initiated only when the timing exceeds the preset time threshold, so that the situation where the STA refuses the self-measurement request at the initial stage of accessing the AP can be avoided.

In an embodiment, after the first signal strength algorithm is selected at S140, with reference to FIG. 4, associating the first signal strength algorithm with the STA identification field includes the following steps S510 to S520.

At S510, an algorithm type of the first signal strength algorithm is acquired.

At S520, the algorithm type is saved and is associated with the STA identification field.

The n preset signal strength algorithms are provided with algorithm types in one-to-one correspondence thereto. After the first signal strength algorithm is selected, the algorithm type of the first signal strength algorithm is acquired, and is associated with the STA identification field. Thus, the algorithm type can be associated when the STA identification field is searched for, and the first signal strength algorithm can be called.

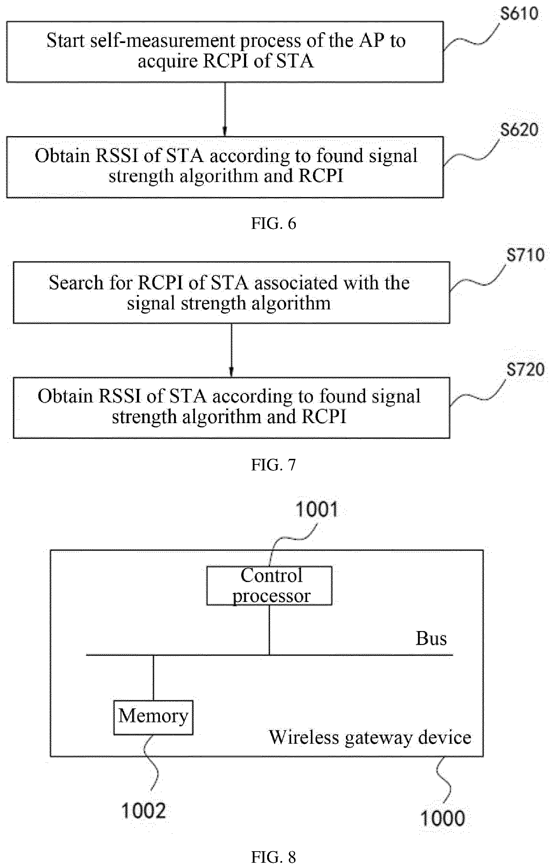

In an embodiment, with reference to FIG. 6, for non-first access of the STA, there are two different situations of calculating the RSSI of the STA. In the first situation, S130 includes the following steps S610 to S620.

At S610, the self-measurement process of the AP is started to acquire the RCPI of the STA.

At S620, the RSSI of the STA is obtained according to the found signal strength algorithm and the RCPI.

In this case, the self-measurement process is started for the associated AP to obtain the RCPI, and the RSSI is calculated according to the obtained RCPI and the found signal strength algorithm. It should be understood that, since the STA does not access for the first time, the STA identification field of the STA has already been stored in the gateway device. According to the method adopted when the STA accesses an AP for the first time, it can be known that, since the STA has associated the STA identification field with the first signal strength algorithm (i.e., the found signal strength algorithm) during the first access, the associated signal strength algorithm can be directly called during the current access, thus obtaining the accurate RSSI.

In the second situation, with reference to FIG. 7, S130 includes the following steps S710 to S720.

At S710, the RCPI of the STA associated with the signal strength algorithm is searched for.

At S720, the RSSI of the STA is obtained according to the found signal strength algorithm and the RCPI.

In this case, the associated AP does not start the self-measurement process, and the RSSI is calculated according to the RCPI value stored during the first access of the STA. The already stored RCPI is obviously acquired when the STA is associated with the STA identification field during the first access, so that the RSSI can be directly calculated during this access without starting the self-measurement.

The embodiments of the present disclosure will be described below by an actual example, and the method includes:
acquiring a Station (STA) identification field of an STA that accesses an Access Point (AP);
searching for a signal strength algorithm associated with the STA identification field;
if an associated signal strength algorithm is found, determining that the STA does not access the AP for the first time;
searching for a Received Channel Power Indication (RCPI) of the STA associated with the signal strength algorithm;
obtaining a Received Signal Strength Indication (RSSI) of the STA according to the found signal strength algorithm and the RCPI;
if no associated signal strength algorithm is found, determining that the STA accesses the AP for the first time;
acquiring power information of the STA, and determining a first RSSI of the STA according to the power information;
starting timing;
if the timing exceeds a preset time threshold, initiating a self-measurement request of the AP;
receiving the RCPI reported by the STA;
substituting the RCPI into n preset signal strength algorithms to obtain n RSSI[i], respectively, where the RSSI[i] is in one-to-one correspondence to the preset signal strength algorithms, and i is a positive integer not greater than n;
determining the RSSI[i] closest to the first RSSI in numerical value, and determining a preset signal strength algorithm corresponding to the RSSI[i] as the first signal strength algorithm;
acquiring an algorithm type of the first signal strength algorithm; and
saving the algorithm type, and associating the algorithm type with the STA identification field.

The signal strength measurement method provided in the embodiments of the present disclosure has at least the following beneficial effects. The STA switches the accessed APs during the roaming process in the wireless local area network. At this time, the RSSI is calculated according to the association information uploaded by the STA when the STA accesses the AP. If the STA identification field of the STA can be found in the gateway, it indicates that the STA does not access the current local area network for the first time. At this time, the signal strength algorithm associated with the STA identification field can be directly called to calculate the RSSI. If the STA identification field of the STA is not found in the gateway, it indicates that the STA accesses the current wireless local area network for the first time. At this time, the first RSSI and the RCPI are calculated by the gateway in a conventional way, a first signal strength algorithm applicable to the calculation of the RSSI of the STA is matched based on a plurality of preset signal strength algorithms, and the first signal strength algorithm is associated with the STA identification field, so that the first signal strength algorithm can be called when the STA accesses the current wireless local area network again. In the embodiments of the present disclosure, by traversing and calculating a plurality of preset signal strength algorithms to match a signal strength algorithm applicable to the STA that accesses an AP for the first time and associating the matched first signal strength algorithm with the STA, the first signal strength algorithm can be directly called to calculate the RSSI of the STA during the roaming process of the STA in the current wireless local area network. Thus, the most appropriate signal strength algorithm can be called for an STA from a different manufacturer to obtain an accurate RSSI, avoiding the problem of RSSI calculation errors caused by poor compatibility during the roaming process.

In accordance with another aspect of the embodiments of the present disclosure, a wireless gateway device is provided. The device includes at least one processor and a memory communicatively connected to the at least one processor, where the memory stores an instruction executable by the at least one processor which, when executed by the at least one processor, causes the at least one processor to implement the signal strength measurement method described above.

With reference to FIG. 8, a control processor 1001 and a memory 1002 in a wireless gateway device 1000 being connected via a bus is taken as an example. As a non-temporary computer-readable storage medium, the memory 1002 may be configured to store non-temporary software programs and non-temporary computer-executable programs. In addition, the memory 1002 may include high-speed random access memories, or may include non-temporary memories, such as at least one disk memory device, a flash memory device or other non-temporary solid-state memory devices. In some implementations, the memory 1002 may include memories remotely arranged relative to the processor 1001. These remote memories may be connected to the wireless gateway device1000 via a network. Examples of the network include, but not limited to, the Internet, an intranet, a local area network, a mobile communication network and combinations thereof.

It should be understood by those having ordinary skills in the art that the device structure shown in FIG. 8 does not constitute any limitation to the wireless gateway device 1000, and more or less components than those shown or combinations of some components or different component arrangements may be included.

The wireless gateway device provided in the embodiments of the present disclosure has at least the following beneficial effects. When an STA accesses a wireless local area network built based on the wireless gateway device in this embodiment, the wireless gateway device can implement the signal strength measurement method described above to be compatible with signal strength algorithms for STAs from different manufacturers. The STA switches the accessed APs during the roaming process in the wireless local area network. At this time, the RSSI is calculated according to the association information uploaded by the STA when the STA accesses the AP. If the STA identification field of the STA can be found in the gateway, it indicates that the STA does not access the current local area network for the first time. At this time, the signal strength algorithm associated with the STA identification field can be directly called to calculate the RSSI. If the STA identification field of the STA is not found in the gateway, it indicates that the STA accesses the current wireless local area network for the first time. At this time, the first RSSI and the RCPI are calculated by the gateway in a conventional way, a first signal strength algorithm applicable to the calculation of the RSSI of the STA is matched based on a plurality of preset signal strength algorithms, and the first signal strength algorithm is associated with the STA identification field, so that the first signal strength algorithm can be called when the STA accesses the current wireless local area network again. In the embodiments of the present disclosure, by traversing and calculating a plurality of preset signal strength algorithms to match a signal strength algorithm applicable to the STA that accesses an AP for the first time and associating the matched first signal strength algorithm with the STA, the first signal strength algorithm can be directly called to calculate the RSSI of the STA during the roaming process of the STA in the current wireless local area network. Thus, the most appropriate signal strength algorithm can be called for an STA from a different manufacturer to obtain an accurate RSSI, avoiding the problem of RSSI calculation errors caused by poor compatibility during the roaming process.

In accordance with another aspect of the embodiments of the present disclosure, a computer-readable storage medium is provided. The computer-readable storage medium stores a computer-executable instruction which, when executed by at least one control processor, for example, executed by a control processor 1001 in FIG. 8, causes the at least one control processor to implement the virtual cloud desktop monitoring method in the above method embodiments, for example, implement the steps S110 to S140 in the method of FIG. 1, the steps S210 to S220 in the method of FIG. 2, the steps S310 to S330 in the method of FIG. 3, the steps S410 to S420 in the method of FIG. 4, the steps S510 to S520 in the method of FIG. 5, the steps S610 to S620 in the method of FIG. 6 and the steps S710 to S720 in the method of FIG. 7.

The device embodiments described above are only illustrative. The units described as separate components may be or may not be physically separated from each other, that is, they may be located in one place or may be distributed on a plurality of network units. Some or all of the modules may be selected according to actual needs to achieve the objectives of the schemes of the embodiments.

It should be understood by those having ordinary skills in the art that all or some of the steps in the methods disclosed above and the systems disclosed above may be implemented as software, firmware, hardware and suitable combinations thereof. Some or all of the physical components may be implemented as software executed by processors such as central processors, digital signal processors or microprocessors, or implemented as hardware, or implemented as integrated circuits such as application-specific integrated circuits. Such software may be distributed on computer-readable mediums, and the computer-readable mediums may include computer storage mediums (or non-temporary mediums) and communication mediums (or temporary mediums). As well-known to those having ordinary skills in the art, the term "computer storage medium" includes volatile or non-volatile and removable or non-removable mediums implemented in any method or technology used to store information (such as computer-readable instructions, data structures, program modules or other data). The computer storage medium may include, but not limited to, RAMs, ROMs, EEPROMs, flash memories and other memory technologies, CD-RMs, digital versatile disks (DVDs) or other optical disk storages, magnetic cassettes, magnetic tapes, magnetic disk storages or other magnetic storage devices, or any other mediums that can be used to store desired information and can be accessed by computers. In addition, as well-known to those having ordinary skills in the art, the communication mediums generally contain computer-readable instructions, data structures, program modules or other data in modulated data signals such as carriers or other transmission mechanisms, and may include any information delivery medium.

Although some implementations of the present disclosure have been described above, the present disclosure is not limited to the above implementations. Those having ordinary skills in the art can make various equivalent variations or replacements without departing from the scope of the present disclosure, and these equivalent variations or replacements shall fall into the scope defined by the appended claims of the present disclosure.

## Claims

1. A signal strength measurement method, comprising:
acquiring a Station, STA, identification field of an STA that accesses an Access Point, AP (S110);
searching for a signal strength algorithm associated with the STA identification field (S120);
in response to an associated signal strength algorithm being found, obtaining a Received Signal Strength Indication, RSSI, of the STA according to the found signal strength algorithm (S130);
**characterized in that** the method further comprises:
in response to no associated signal strength algorithm being found, acquiring a first RSSI and a Received Channel Power Indication, RCPI, of the STA, matching a first signal strength algorithm from preset signal strength algorithms according to the first RSSI and the RCPI, and associating the first signal strength algorithm with the STA identification field (S140).

2. The signal strength measurement method of claim 1, wherein the STA identification field comprises a Media Access Control, MAC, address and an Internet Protocol, IP, address of the STA.

3. The signal strength measurement method of claim 1, wherein during the acquisition of the STA identification field of the STA which accesses the AP, power information of the STA is also acquired; and
acquiring a first RSSI and an RCPI of the STA comprises:
determining the first RSSI of the STA according to the power information;
starting a self-measurement process of the AP; and
receiving the RCPI reported by the STA.

4. The signal strength measurement method of claim 3, wherein starting a self-measurement process of the AP comprises:
starting timing; and
in response to the timing exceeding a preset time threshold, initiating a self-measurement request.

5. The signal strength measurement method of claim 1, wherein n signal strength algorithms are preset, wherein n is a positive integer; and matching a first signal strength algorithm from preset signal strength algorithms according to the first RSSI and the RCPI comprises:
substituting the RCPI into the n preset signal strength algorithms to obtain n RSSI[i], respectively, wherein the RSSI[i] is in one-to-one correspondence to the preset signal strength algorithms, and i is a positive integer not greater than n (S210); and
determining an RSSI[i] closest to the first RSSI in numerical value, and determining a preset signal strength algorithm corresponding to the RSSI[i] as the first signal strength algorithm (S220).

6. The signal strength measurement method of claim 1, wherein associating the first signal strength algorithm with the STA identification field comprises:
acquiring an algorithm type of the first signal strength algorithm (S510); and
saving the algorithm type, and associating the algorithm type with the STA identification field (S520).

7. The signal strength measurement method of claim 1, wherein obtaining an RSSI of the STA according to the found signal strength algorithm comprises:
starting a self-measurement process of the AP to acquire an RCPI of the STA (S610); and
obtaining the RSSI of the STA according to the found signal strength algorithm and the RCPI (S620).

8. The signal strength measurement method of claim 1, wherein obtaining an RSSI of the STA according to the found signal strength algorithm comprises:
searching for an RCPI of the STA associated with the signal strength algorithm (S710); and
obtaining the RSSI of the STA according to found searched signal strength algorithm and the RCPI (S720).

9. A wireless gateway device (S110), comprising at least one processor (S1001) and a memory (S1002) communicatively connected to the at least one processor (S1001), wherein the memory (S1002) stores an instruction executable by the at least one processor (S1001) which, when executed by the at least one processor (S1001), causes the at least one processor (S1001) to perform the signal strength measurement method of any one of claims 1 to 8.

10. A computer-readable storage medium, storing a computer-executable instruction which, when executed by a computer, causes the computer to perform the signal strength measurement method of any one of claims 1 to 8.

## Patentansprüche

1. Signalstärkemessverfahren, umfassend:
Erfassen eines Stations-, STA-, Identifikationsfelds einer Station, STA, die auf einen Zugangspunkt, AP, (S110) zugreift;
Suchen nach einem Signalstärkealgorithmus, der mit dem STA-Identifikationsfeld (S120) assoziiert ist;
als Reaktion darauf, dass ein assoziierter Signalstärkealgorithmus gefunden wird, Erlangen eines Indikators für Empfangssignalstärke, RSSI, der STA gemäß dem gefundenen Signalstärkealgorithmus (S130);
**dadurch gekennzeichnet, dass** das Verfahren ferner Folgendes umfasst
als Reaktion darauf, dass kein assoziierter Signalstärkealgorithmus gefunden wird,
Erfassen einer ersten RSSI und eines Indikators für Kanalempfangsleistung, RCPI, der STA, Anpassen eines ersten Signalstärkealgorithmus aus voreingestellten Signalstärkealgorithmen gemäß dem ersten RSSI und dem RCPI, und Assoziieren des ersten Signalstärkealgorithmus mit dem STA-Identifikationsfeld (S140).

2. Signalstärkemessverfahren nach Anspruch 1, wobei das STA-Identifikationsfeld eine Adresse einer Medienzugriffssteuerung, MAC, und eine Adresse eines Internetprotokolls, IP der STA umfasst.

3. Signalstärkemessverfahren nach Anspruch 1, wobei während der Erfassung des STA-Identifikationsfelds der STA, die auf den AP zugreift, auch die Leistungsinformationen der STA erfasst wird; und
ein Erfassen eines ersten RSSI und eines RCPI der STA Folgendes umfasst:
Bestimmen des ersten RSSI der STA gemäß der Leistungsinformationen;
Starten eines Selbstmessungsprozesses des AP; und
Empfangen des von der STA gemeldeten RCPI.

4. Signalstärkemessverfahren nach Anspruch 3, wobei ein Starten eines Selbstmessungsprozesses des APs Folgendes umfasst:
Startzeitpunkt; und
als Reaktion darauf, dass ein voreingestellter Zeitschwellenwert überschritten wird, Initiieren einer Selbstmessungsanforderung.

5. Signalstärkemessverfahren nach Anspruch 1, wobei n Signalstärkealgorithmen voreingestellt sind, wobei n eine positive ganze Zahl ist; und ein Anpassen eines ersten Signalstärkealgorithmus aus voreingestellten Signalstärkealgorithmen gemäß dem ersten RSSI und dem RCPI Folgendes umfasst:
Ersetzen des RCPI in den n voreingestellten Signalstärkealgorithmen, um jeweils n RSSI[i] zu erlangen, wobei der RSSI[i] in eins-zu-eins-Entsprechung zu den voreingestellten Signalstärkealgorithmen ist und i eine positive ganze Zahl nicht größer als n ist (S210); und
Bestimmen eines RSSI[i], der dem ersten RSSI im numerischen Wert am nächsten kommt, und Bestimmen eines voreingestellten Signalstärkealgorithmus, der dem RSSI[i] entspricht, als den ersten Signalstärkealgorithmus (S220).

6. Signalstärkemessverfahren nach Anspruch 1, wobei ein Assoziieren des ersten Signalstärkealgorithmus mit dem STA-Identifikationsfeld Folgendes umfasst:
Erfassen eines Algorithmustyps des ersten Signalstärkealgorithmus (S510); und
Speichern des Algorithmustyps und Assoziieren des Algorithmustyps mit dem STA-Identifikationsfeld (S520).

7. Signalstärkemessverfahren nach Anspruch 1, wobei ein Erlangen eines RSSI der STA gemäß dem gefundenen Signalstärkealgorithmus Folgendes umfasst:
Starten eines Selbstmessungsprozesses des AP zum Erfassen eines RCPI der STA (S610); und
Erlangen des RSSI der STA gemäß dem gefundenen Signalstärkealgorithmus und dem RCPI (S620).

8. Signalstärkemessverfahren nach Anspruch 1, wobei ein Erlangen eines RSSI der STA gemäß dem gefundenen Signalstärkealgorithmus Folgendes umfasst:
Suchen nach einem RCPI der STA, der mit dem Signalstärkealgorithmus assoziiert ist (S710); und
Erlangen des RSSI der STA gemäß dem gefundenen gesuchten Signalstärkealgorithmus und dem RCPI (S720).

9. Drahtlose Gateway-Vorrichtung (S110), umfassend mindestens einen Prozessor (S1001) und einem Speicher (S1002), der kommunikativ mit dem mindestens einen Prozessor (S1001) verbunden ist, wobei der Speicher (S1002) eine von dem mindestens einen Prozessor (S1001) ausführbare Anweisung speichert, die, wenn sie von dem mindestens einen Prozessor (S1001) ausgeführt wird, den mindestens einen Prozessor (S1001) veranlasst, das Signalstärkemessverfahren nach einem der Ansprüche 1 bis 8 durchzuführen.

10. Computerlesbares Speichermedium, das eine computerausführbaren Anweisung speichert, die, wenn sie von einem Computer ausgeführt wird, den Computer veranlasst, das Signalstärkemessverfahren nach einem der Ansprüche 1 bis 8 durchzuführen.

## Revendications

1. Procédé de mesure de l'intensité du signal, comprenant :
l'acquisition d'une Station, STA, du champ d'identification d'une STA qui accède à un point d'accès, AP (S110) ;
la recherche d'un algorithme d'intensité du signal associé au champ d'identification STA (S120);
en réponse à la détection d'un algorithme d'intensité de signal associé, l'obtention d'une indication de l'intensité de signal reçu, RSSI, de la STA en fonction de l'algorithme d'intensité de signal détecté (S130) ;
**caractérisé en ce que** le procédé comprend en outre : en réponse à l'absence d'algorithme d'intensité de signal associé, l'acquisition d'une première RSSI et d'une indication d'intensité de canal reçue, RCPI, de la STA, la mise en correspondance d'un premier algorithme d'intensité de signal parmi des algorithmes d'intensité de signal prédéfinis en fonction de la première RSSI et de la RCPI, et l'association du premier algorithme d'intensité de signal au champ d'identification de la STA (S140).

2. Procédé de mesure de l'intensité du signal selon la revendication 1, dans lequel le champ d'identification de la STA comprend une adresse MAC (Media Access Control) et une adresse IP (Protocole Internet) de la STA.

3. Procédé de mesure de l'intensité du signal selon la revendication 1, dans lequel, pendant l'acquisition du champ d'identification de la STA de la STA qui accède au 'AP, les informations relatives à l'intensité de la STA sont également acquises ; et
l'acquisition d'une première RSSI et d'une RCPI de la STA comprend :
la détermination de la première RSSI de la STA en fonction des informations relatives à l'intensité ;
le lancement d'un processus d'auto-mesure du AP ; et la réception de la RCPI communiquée par la STA.

4. Procédé de mesure de l'intensité du signal selon la revendication 3, dans lequel le démarrage d'un processus d'auto-mesure du AP comprend :
le moment de démarrage ; et
en réponse au dépassement d'un seuil de temps prédéfini, le lancement d'une demande d'automesure.

5. Procédé de mesure de l'intensité du signal selon la revendication 1, dans lequel n algorithmes d'intensité du signal sont prédéfinis, dans lequel n est un nombre entier positif ; et la mise en correspondance d'un premier algorithme d'intensité du signal parmi les algorithmes d'intensité du signal prédéfinis en fonction de la première RSSI et de la RCPI comprend :
la substitution de la RCPI dans les n algorithmes d'intensité de signal prédéfinis afin d'obtenir respectivement n RSSI[i], dans lequel la RSSI[i] est en correspondance biunivoque avec les algorithmes d'intensité de signal prédéfinis, et i est un entier positif non supérieur à n (S210) ; et
la détermination d'une RSSI[i] la plus proche de la première RSSI en valeur numérique, et la détermination d'un algorithme d'intensité de signal prédéfini correspondant à la RSSI[i] comme premier algorithme d'intensité de signal (S220).

6. Procédé de mesure de l'intensité du signal selon la revendication 1, dans lequel l'association du premier algorithme d'intensité du signal au champ d'identification de la STA comprend :
l'acquisition d'un type d'algorithme du premier algorithme d'intensité du signal (S510) ; et
l'enregistrement du type d'algorithme et l'association du type d'algorithme au champ d'identification de la STA (S520).

7. Procédé de mesure de l'intensité du signal selon la revendication 1, dans lequel l'obtention d'une RSSI de la STA en fonction de l'algorithme d'intensité du signal trouvé comprend :
le lancement d'un processus d'auto-mesure du AP afin d'obtenir une RCPI de la STA (S610) ; et
l'obtention de la RSSI de la STA en fonction de l'algorithme d'intensité du signal détecté et la RCPI (S620).

8. Procédé de mesure de l'intensité du signal selon la revendication 1, dans lequel l'obtention d'une RSSI de la STA en fonction de l'algorithme d'intensité du signal trouvé comprend :
la recherche d'une RCPI de la STA associée à l'algorithme d'intensité du signal (S710) ; et
l'obtention de la RSSI de la STA en fonction de l'algorithme de recherche de l'intensité du signal trouvé et le RCPI (S720).

9. Passerelle sans fil (S110), comprenant au moins un processeur (S1001) et une mémoire (S1002) connectée de manière communicative à au moins un processeur (S1001), dans laquelle la mémoire (S1002) stocke une instruction exécutable par au moins un processeur (S1001) qui, lorsqu'elle est exécutée par au moins un processeur (S1001), amène l'au moins un processeur (S1001) à mettre en œuvre le procédé de mesure de l'intensité du signal selon l'une quelconque des revendications 1 à 8.

10. Support de stockage lisible par ordinateur, stockant une instruction exécutable par ordinateur qui, lorsqu'elle est exécutée par un ordinateur, amène celui-ci à mettre en œuvre le procédé de mesure de l'intensité du signal selon l'une quelconque des revendications 1 à 8.
